Europäisches Patentamt

European Patent Office

Office européen des brevets

(11) Veröffentlichungsnummer: **0 297 228**
**A1**

(19)

(12) # EUROPÄISCHE PATENTANMELDUNG

(21) Anmeldenummer: **88105952.1**

(22) Anmeldetag: **14.04.88**

(51) Int. Cl.4: **F16B 13/06**

(30) Priorität: **13.06.87 DE 3719798**

(43) Veröffentlichungstag der Anmeldung:
**04.01.89 Patentblatt 89/01**

(84) Benannte Vertragsstaaten:
**AT BE CH ES FR GB GR IT LI NL SE**

(71) Anmelder: **fischerwerke Artur Fischer GmbH & Co. KG**
**Weinhalde 14-18**
**D-7244 Tumlingen/Waldachtal 3(DE)**

(72) Erfinder: **Fischer, Artur, Prof. Dr. h. c.**
**Weinhalde 34**
**D-7244 Waldachtal 3/Tumlingen(DE)**

(54) **Spreizdübel für die Verankerung in konisch nach innen erweitert hergestellten Bohrlöchern.**

(57) Für nach innen konisch erweiterte Bohrlöcher (1) können Spreizdübel Verwendung finden, die einen am Bohrlochgrund positionierten Spreizkonus (3) haben, auf den eine Spreizhülse (4) aufschiebbar ist. Dadurch wird eine formschlüssige Verbindung zwischen Spreizdübel und dem Mauerwerk (9) erhalten.

Das Aufschieben der Spreizhülse (4) erfolgt anmeldungsgemäß dadurch, daß das aus dem Bohrloch (1) herausragende Befestigungsteil (5) mittels eines Schraubers oder dgl. gedreht wird, wobei sichergestellt wird, daß der mit dem Befestigungsteil (5) über ein Gewinde (10, 11) verbundene Spreizkonus (3) sich nicht mitdreht.

FIG.1

EP 0 297 228 A1

## Spreizdübel für die Verankerung in konisch nach innen erweitert hergestellen Bohrlöchern

Die Erfindung betrifft einen Spreizdübel für die Verankerung in konisch nach innen erweitert hergestellten Bohrlöchern, mit einem am Bohrlochgrund sich abstützenden, einen Spreizkonus aufweisenden Bolzen, der von einer teilweise geschlitzten Spreizhülse umschlossen und über ein Gewinde mit einem Befestigungsteil verbunden ist.

Durch konisch erweiterte Bohrlöcher ist es möglich, nahezu spreizdruckfreie Verankerungen durchzuführen. die aufgrund der erhöhten Aufspreizung des Befestigungselementes zusätzlich noch höhere Haltewerte erbringen. Bekannte Spreizdübel besitzen einen Spreizkonus auf den eine Spreizhülse durch Verwendung eines geeigneten Einschlagwerkzeugs aufschlagbar ist. Der Spreizkonus kann an einem Bolzen ausgebildet sein, der über eine Schraubverbindung mit einem Gewindebolzen verbunden ist. Der Gewindebolzen ragt mit seinem anderen Ende aus dem Bohrloch heraus und kann dort ein Außengewinde aufweisen, so daß mittels einer Schraubenmutter ein zu befestigender Gegenstand an der Außenwand des Mauerwerks bzw. einer Decke festgeschraubt werden kann.

Die bekannten Spreizdübel, die mittels Schlagmontage im Bohrloch mit konischer Hinterschneidung einsetzbar sind, erfordern spezielle Einschlagwerkzeuge und lassen sich nicht auf einfache Weise an unterschiedliche Klemmlängen der zu befestigenden Gegenstände anpassen.

Der Erfindung liegt die Aufgabe zugrunde, einen Spreizdübel für die Verankerung in konisch nach innen erweitert hergestellten Bohrlöchern zu - schaffen, der eine einfache Montage ermöglicht und auf einfache Weise für unterschiedliche Klemmlängen der zu befestigenden Gegenstände anpaßbar ist. Die Lösung dieser Aufgabe wird bei einem Spreizdübel der eingangs genannten Gattung dadurch erhalten, daß durch Verdrehen des Befestigungsteils gegenüber dem Bolzen die Spreizhülse auf den Spreizkonus aufschiebbar ist und daß an der Stirnseite des Spreizkonus als Drehsicherung wenigstens ein Sicherungselement absteht. Als Drehsicherungselemente können Vorsprünge, Stege oder angeformte Spitzen dienen, die am Bohrlochgrund am Mauerwerk eingreifen und den Bolzen dadurch gegen Verdrehen sichern. Das Befestigungsteil, welches vorzugsweise als Gewindebolzen ausgebildet ist, kann nun mittels eines geeigneten Schraubwerkzeugs in Richtung Bolzen eingeschraubt werden. wobei der Gewindebolzen die Spreizhülse auf den Spreizkonus aufschiebt.

Damit zwischen Spreizhülse und Gewindebolzen eine möglichst geringe Reibung auftritt, sieht eine Weiterbildung der Erfindung vor. daß zwischen dem Befestigungsmittel und der Spreizhülse ein Gleitelement angeordnet ist. Als Gleitelement dient dabei vorzugsweise eine Kunststoffscheibe mit einer Durchführung für den Gewindeabschnitt des Bolzens.

Weiterhin kann seitlich am Spreizkonus ein Sicherungselement abstehen. welches in einen am Spreizkonus ausgebildeten Längsschlitz eingreift. Bei der Montage setzt sich der Spreizkonus bereits nach geringfügiger Aufweitung so stark an der Wand des Bohrlochs fest. daß der Spreizkonus in Verbindung mit dem Sicherungselement eine Drehsicherung für den Bolzen bildet.

Zum Ansetzen eines Schraubers oder einer Bohrmaschine können am abstehenden Ende des Gewindebolzens ein Sechskant oder seitliche Abflachungen vorgesehen sein.

Die Erfindung wird nachfolgend anhand der Zeichnung näher erläutert.

Es zeigen:

Figur 1 einen in ein Bohrloch eingesetzten Spreizdübel,

Figur 2 die in das Bohrloch eingesetzte Stirnseite des Spreizkonus des Spreizdübels von Figur 1 und

Figur 3 die Stirnseite eines weiteren Ausführungsbeispiels eines Spreizkönüs.

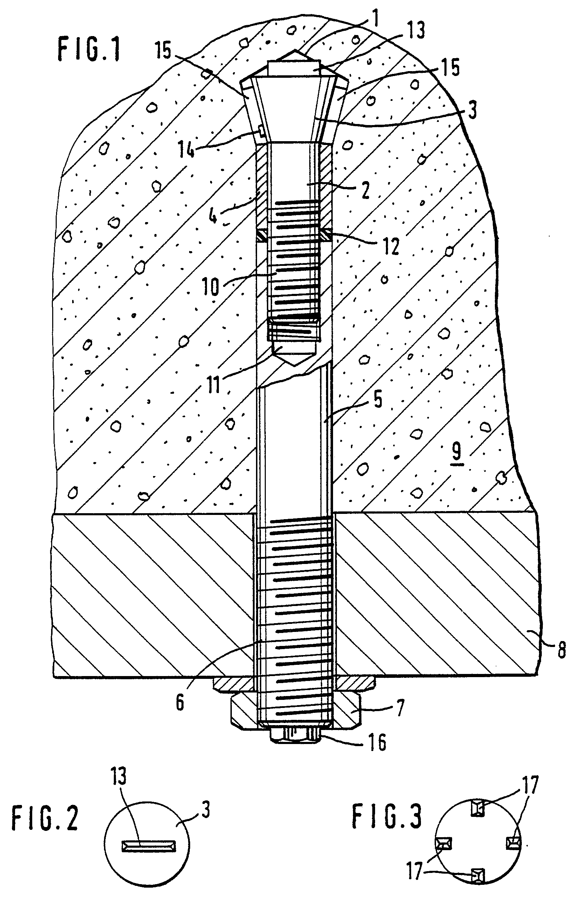

Der in Figur 1 dargestellte Spreizdübel ist in ein Bohrloch 1 eingesetzt, welches im Bereich des Bohrlochgrundes nach innen konisch erweitert ist.

Der Spreizdübel besteht aus einem Bolzen 2 mit Spreizkonus 3, einer Spreizhülse 4 und einem Gewindebolzen 5, der ein Befestigungsteil darstellt. Am nach außen aus dem Bohrloch 1 herausgeführten Ende des Spreizdübels besitzt der Gewindebolzen 5 ein Außengewinde 6 auf das eine Schraubenmutter 7 gegen einen Gegenstand 8 aufgeschraubt ist. Der Gegenstand 8 wird somit gegen die Außenwand des Mauerwerks 9 gepreßt.

Der Bolzen 2 greift mit einem Gewindeabschnitt 10 in eine Gewindebohrung 11 des Gewindebolzens 5 ein. Wird der Gewindebolzen 5 vor dem Aufbringen der Schraubenmutter 7 gegenüber dem Bolzen 2 verdreht, so bewegt sich der Gewindebolzen 5 in Richtung Spreizkonus 3. Dadurch wird die Spreizhülse 4 auf den Spreizkonus 3 aufgeschoben bis diese die in der Zeichnung dargestellte Position einnimmt. Damit während des Aufschiebens der Spreizhülse 4 zwischen Gewindebolzen 5 und Spreizhülse 4 nur eine möglichst geringe Reibung auftritt, ist eine Gleitscheibe 12 vorgesehen. die vorzugsweise aus Kunststoff besteht.

Beim Drehen des Gewindebolzens 5 wird dieser in das Bohrloch hineingedrückt, so daß ein an der Stirnseite des Spreizkonus 3 angeformtes Sicherungselement 13, das hier als Steg ausgebildet ist, am Bohrlochgrund eingreift. Dadurch wird sichergestellt, daß sich der Bolzen 2 beim Drehen des Gewindebolzens 5 nicht mitdreht.

Als weiteres Sicherungselement 14 gegen Verdrehen ist seitlich am Spreizkonus 3 ein Vorsprung ausgebildet, der in einen Längsschlitz 15 der Spreizhülse 4 eingreift. Sobald die Spreizhülse 4 durch geringfügiges Aufspreizen im Bohrloch drehsicher festsitzt, bildet der Vorsprung 14 die gewünschte Drehsicherung.

Die Sicherungselemente 13, 14 stellen lediglich mögliche Ausführungsformen dar, wobei hier auch Nocken, Spitzen oder dgl. Verwendung finden können.

Um am Gewindebolzen 5 außen einen Schrauber oder ein anderes Werkzeug ansetzen zu können, besitzt der Gewindebolzen 5 seitliche Abflachungen oder einen Sechskant 16. Es könnte hier jedoch auch eine andere Oberflächenform vorgesehen sein, um eine formschlüssige Verbindung mit einem geeigneten Werkzeug zu erzielen.

In Figur 2 ist die Stirnseite des Spreizkonus 3 mit dem als Steg ausgebildeten Sicherungselement 13 dargestellt, welches sich nach außen verjüngt.

In Figur 3 ist ein weiteres Ausführungsbeispiel eines Spreizkonus angegeben, an dessen Stirnseite Sicherungselemente 17 angeordnet sind, die als Nocken oder Spitzen ausgebildet sein können.

## Ansprüche

1. Spreizdübel für die Verankerung in konisch nach innen erweitert hergestellten Bohrlöchern, mit einem am Bohrlochgrund sich abstützenden, einen Spreizkonus aufweisenden Bolzen, der von einer teilweise geschlitzten Spreizhülse umschlossen und über ein Gewinde mit einem Befestigungsteil verbunden ist, **dadurch gekennzeichnet**, daß durch Verdrehen des Befestigungsteils (5) gegenüber dem Bolzen (2) die Spreizhülse (4) auf den Spreizkonus (3) aufschiebbar ist und daß an der Stirnseite des Spreizkonus (3) als Drehsicherung wenigstens ein Sicherungselement (13) absteht.

2. Spreizdübel nach Anspruch 1, **dadurch gekennzeichnet**, daß am abstehenden Ende des Befestigungsteils (5) ein Ansatzbereich ausgebildet ist, an dem ein Schrauber oder eine Bohrmaschine formschlüssig ansetzbär ist.

3. Spreizdübel nach einem der Ansprüche 1 oder 2, **dadurch gekennzeichnet**, daß zwischen dem Befestigungsteil (5) und der Spreizhülse (4) ein Gleitelement (12) angeordnet ist.

4. Spreizdübel nach Anspruch 3, **dadurch gekennzeichnet**, daß das Gleitelement eine mit einer Durchführung versehene Kunststoffscheibe (12) ist.

5. Spreizdübel nach einem der vorhergehenden Ansprüche, **dadurch gekennzeichnet**, daß das Befestigungsteil ein Gewindebolzen (5) mit Innengewinde (11) ist, in das der Bolzen (2) mit einem Gewindeabschnitt (10) eingreift.

6. Spreizdübel nach einem der vorhergehenden Ansprüche, **dadurch gekennzeichnet**, daß in wenigstens einen der Schlitze (15) der Spreizhülse (4) ein seitlich am Spreizkonus (3) abstehendes Sicherungselement (14) eingreift.

7. Spreizdübel nach einem der Ansprüche 2 bis 6, **dadurch gekennzeichnet**, daß als Ansatzbereich seitliche Abflachungen oder ein Sechskant (16) vorgesehen ist.

FIG.1

15
1
13
15
3
14
4
2
12
10
11
5
9
8
6
7
16

FIG.2

13
3

FIG.3

17
17
17

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | EP-A-0 217 053 (UPAT)<br>* Spalte 2, Zeile 30 - Spalte 4, Zeile 2; Figur 1 *<br>--- | 1 | F 16 B 13/06 |
| A | AU-B- 536 399 (RAMSET FASTENERS)<br>* Seite 4, Zeilen 4-26; Figur 1 *<br>--- | 1,2,5 | |
| A | DE-A-2 909 749 (STUMPP + KURZ GmbH)<br>* Seite 14, Zeile 15 - Seite 15, Zeile 18; Seite 18, Zeilen 6-13; Figuren 1,2 *<br>--- | 1,2,5 | |
| A | GB-A- 722 340 (REES)<br>* Insgesamt *<br>--- | 1,2,5 | |
| A | FR-A-2 504 996 (FISCHER)<br>----- | - | |

| | | | RECHERCHIERTE SACHGEBIETE (Int. Cl.4) |
|---|---|---|---|
| | | | F 16 B |

Der vorliegende Recherchenbericht wurde für alle Patentansprüche erstellt

| Recherchenort | Abschlußdatum der Recherche | Prüfer |
|---|---|---|
| DEN HAAG | 30-09-1988 | VAN DER WAL W |